# EUROPÄISCHE PATENTSCHRIFT

(11) **EP 1 204 771 B1**
(45) Veröffentlichungstag und Bekanntmachung des Hinweises auf die Patenterteilung: **17.12.2003**
(21) Anmeldenummer: 00965765.1
(22) Anmeldetag: 17.08.2000
(51) Int. Cl.: C21D 6/02, C21D 1/10

(54) **HALBZEUGE UND FERTIGPRODUKTE AUS AUSTENITISCHEM EDELSTAHL UND VERFAHREN ZU DEREN HERSTELLUNG**
SEMIFINISHED AND FINISHED PRODUCTS MADE OF AUSTENITIC SPECIAL STEEL AND METHOD FOR THE PRODUCTION THEREOF
DEMI-PRODUITS ET PRODUITS FINIS EN ACIER FIN AUSTENITIQUE ET PROCEDE DE FABRICATION DESDITS PRODUITS

(30) Priorität: 19.08.1999 DE 29914269 U; 24.08.1999 DE 29914802 U; 15.09.1999 DE 29916517 U; 01.12.1999 DE 29921121 U; 12.12.1999 DE 29921813 U
(43) Veröffentlichungstag der Anmeldung: 15.05.2002
(73) Patentinhaber: Friederich, Heinrich, 68649 Gross-Rohrheim (DE); Schmoock, Reinhard, 57250 Netphen (DE)
(72) Erfinder: Friederich, Heinrich, 68649 Gross-Rohrheim (DE); Schmoock, Reinhard, 57250 Netphen (DE)
(74) Vertreter: Weber, Dieter, Dr.
(86) Internationale Anmeldenummer: DE0002800
(87) Internationale Veröffentlichungsnummer: WO01014600

(56) Entgegenhaltungen:
- EP-A- 0 774 589
- DE-A- 19 815 670
- DE-U- 29 914 269
- DE-U- 29 914 802
- GB-A- 1 074 576
- US-A- 2 888 373

## Beschreibung

Die vorliegende Erfindung betrifft Halbzeuge und Fertigprodukte, hergestellt aus korrosionsbeständigem ausscheidungshärtbaren austenitischen Edelstahl mit einem hohen Gehalt an interstitiell gelöstem Stickstoff, mit im wesentlichen glatten Oberflächen. Ebenso betrifft die vorliegende Erfindung auch ein Verfahren zur Herstellung entsprechender Halbzeuge und Fertigprodukte.

Unter Halbzeugen und Fertigprodukten mit im wesentlichen glatten Oberflächen werden im Rahmen der vorliegenden Beschreibung solche Stahlhalbzeuge und Fertigprodukte verstanden, bei denen die Maße entsprechender Oberflächenstrukturen mit den Maßen des Materials selbst, also insbesondere mit der Materialstärke, in etwa vergleichbar sind, im Unterschied zu Bauteilen wie zum Beispiel Schrauben, die als scharf gekerbte Bauteile anzusehen sind. Insbesondere liegen entsprechende Strukturen bei den Gegenständen, auf welche sich die vorliegende Erfindung bezieht, typischerweise im Bereich von deutlich oberhalb von 1 mm. In erster Linie erstreckt sich die vorliegende Erfindung auf Profilteile und/oder Bleche, das heißt auf Teile mit einem über die Länge hinweg im wesentlichen konstanten Profil, sei es nun kreisförmig, elliptisch, polygonal oder von einem mehr oder weniger unregelmäßigen Umriß begrenzt. Die Materialstärke sollte dabei im Falle von Profilstäben im Regelfall mehr als 1 mm und im Falle von Blechen mehr als 0,2 mm betragen.

An eine Vielzahl von Bauteilen aus Edelstahl werden gleichzeitig hohe Anforderungen an Festigkeit und Korrosionsbeständigkeit gestellt. Typische Beispiele für solche Bauteile sind Spannstäbe, Zuganker, Tragteile, Rohre, Hülsen, Bleche, Profile mit unterschiedlichen Querschnitten etc. Auch andere Bauteile mit variablen Querschnitten, wie z.B. Wellen, die bereichsweise unterschiedliche, abgestufte Durchmesser haben, müssen gelegentlich hohe Anforderungen an Korrosionsbeständigkeit und Festigkeit erfüllen. Auf derartige Gegenstände richtet sich die vorliegende Erfindung.

Solche Halbzeuge und Fertigprodukte aus austenitischem korrosionsbeständigen Edelstahl erhalten zunächst ihre Festigkeit im allgemeinen über eine mehrfache Querschnittsreduktion durch Kaltwalzen, wahlweise mit oder ohne zwischengeschaltete Lösungsglühbehandlung. Schließlich erfolgt für entsprechende Bauteile eine Wärmebehandlung im Ofen eine Ausscheidungshärtung, typischerweise in Stickstoffatmosphäre. Dabei besteht allerdings die Gefahr einer Chromcarbidausscheidung, die zur Absenkung der Korrosionsbeständigkeit und zur Erhöhung der Gefahr der interkristallinen Korrosion führt. Darüber hinaus wird bei der Wärmebehandlung im Ofen zwangsläufig eine Ausscheidungshärtung über das gesamte Materialvolumen herbeigeführt. Eine nur partielle Erhöhung der Festigkeit bestimmter Bauteilbereiche ist dabei nicht möglich. Die Ausscheidungshärtung im Ofen ist außerordentlich zeit- und kostenintensiv und erhöht den Preis für entsprechende Produkte um ein Mehrfaches.

Entsprechende Werkstoffe sind z.B. in den europäischen Patentschriften mit den Nummern 545 852 B1 und der europäischen Anmeldung 774 589 A1 beschrieben.

Aus der DE-OS 198 15 670 ist bereits eine selbstgewindeformende Schraube aus korrosionsbeständigem Material bekannt, die im unteren Schneid- und Gewindebereich induktiv gehärtet wird. Bei einer solchen Schraube bilden allerdings die gehärteten Strukturen sehr feine und relativ dünnwandige Oberflächenstrukturen, die bei einer vorangegangenen Kaltverformung eine deutliche Gefügeänderung (Kaltverfestigung) erfahren haben, so daß sich in diesem Fall die induktive Ausscheidungshärtung erfolgreich anwenden ließ, da sie im wesentlichen nur auf die Gewindegänge beschränkt war.

Gegenüber diesem Stand der Technik liegt der vorliegenden Erfindung die Aufgabe zugrunde, Halbzeuge und Fertigprodukte sowie ein Verfahren zu deren Herstellung zu schaffen, die bei preisgünstiger Herstellung eine besonders günstige Kombination von Festigkeit und Korrosionsbeständigkeit erzielen.

Diese Aufgabe wird dadurch gelöst, daß das Stahlmaterial zonenweise ausscheidungsgehärtet ist und eine Zusammensetzung gemäß Anspruch 1 aufweist.

Die Ausscheidungshärtung erfolgt dabei vorzugsweise induktiv, wobei alternativ auch eine Laserbestrahlung denkbar ist.

Das Verfahren der induktiven (oder durch Laserbestrahlung erfolgenden) Ausscheidungshärtung bringt dabei den wesentlichen Vorteil mit sich, daß die Bereiche und auch die Schichtdicken, innerhalb welcher die Ausscheidungshärtung erfolgt, ganz gezielt ausgewählt werden können. Auf diese Weise kann man Festigkeit und Korrosionsbeständigkeit bereichsweise optimieren, da im allgemeinen die durch Ausscheidung gehärteten Bereiche zu einer etwas höheren Korrosionsanfälligkeit neigen, dafür aber eine höhere Festigkeit aufweisen.

Es hat sich jedoch gezeigt, daß für die in Rede stehenden Gegenstände eine induktive Härtung überraschenderweise möglich ist, obwohl dies für austhenitische Stähle problematisch erschien. Die erfindungsgemäße Zusammensetzung gewährleistet besonders günstige Eigenschaften hinsichtlich der Kombination aus Festigkeit und Korrosionsbeständigkeit. Dabei sollten bevorzugt die Mengen der einzelnen Bestandteile so aufeinander abgestimmt werden, daß der verbleibende Eisenanteil zwischen 65 und 68 % liegt

Durch diese Legierungsanteile erhält der Stahl eine gute Korrosionsbeständigkeit vergleichbar mit A2-Qualitäten. Die Begrenzung des Stickstoffgehalts entspricht der natürlichen Löslichkeit im Austenit, die mit zunehmendem Mangangehalt ansteigt. Die obere Begrenzung des Kohlenstoff-Gehalts vermeidet im Zusammenhang mit der induktiven Ausscheidungshärtung weitestgehend die Chromcarbid-Bildung, die sich bevorzugt auf den Komgrenzen einstellen würde und die Anfälligkeit gegenüber interkristalliner Korrosion begünstigt.

Der Werkstoff kann in der bei austenitischen Edelstahl-Legierungen gewohnten Weise, durch Walzen oder Ziehen, auf die gewünschte Endabmessung verformt werden, wobei zur Erzielung höchster Festigkeiten die Fertigungsfolge derart auszulegen ist, daß im Anschluß an die zuletzt vorgenommene Warmumformung oder Lösungsglühbehandlung (Lösungsglühung und Abschreckung beseitigt die durch Kaltverformung eingestellte Verfestigung) eine Querschnittsreduktion durch Kaltumformung > 40% einzuplanen ist.

Durch diese Kaltverformung können aufgrund von Kaltverfestigung und verformungsinduzierter Martensitbildung bereits Festigkeiten Rm = 1800 MPa eingestellt werden.

Die anschließende induktive Ausscheidungsbehandlung, die im Temperaturbereich 300°C < T < 550°C vorgenommen wird, führt zur Bildung intermetallischer Phasen. Vornehmlich handelt es sich um Nitride und/oder in geringem Umfang Carbide, die zur erwünschten Festigkeits- bzw. Härtesteigerung um bis zu 30% führen, insbesondere in den bereits durch die mechanische Umformung am höchsten verfestigten und umgewandelten Gefügebereichen. Eine Einschränkung der Korrosionseigenschaften ist nicht zu erwarten.

Allein diese Wärmebehandlung erlaubt (neben der ebenfalls ins Auge zu fassenden Laserbestrahlung) die partielle Festigkeitssteigerung in definierten Querschnittsbereichen.

Die induktive Ausscheidungshärtung erlaubt aufgrund der äußerst kurzen Wärmebehandlungszeiten (mehrere Sekunden), einen deutlichen Preisvorteil gegenüber den konventionell mittels mehrstündiger Ofenerwärmung behandelten Bauteilen.

Durch die Erfindung werden Gegenstände mit im wesentlichen glattflächiger Oberfläche und Durchmesser größer 1 mm geschaffen, die sowohl einen günstigen Materialgrundpreis - vergleichbar mit dem bekannter A2-Qualitäten - bei guten Korrosionseigenschaften aufweisen, als auch wahlweise über der gesamten Länge oder in Teilbereichen über der Länge oder dem Querschnitt hohe Festigkeiten/Härten aufweisen.

Hinsichtlich der Formen und Profilquerschnitte können die erfindungsgemäßen Gegenstände in weiten Bereichen variieren. Bevorzugt sind Profilteile in Form von Blechen, Stäben oder auch Drähten, die kontinuierlich durch eine induktive Behandlungseinheit hindurchgeführt werden können.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren.

Es zeigen:
- Figur 1: ein Profilteil mit quadratischem Querschnitt,
- Figur 2: ein Profilteil mit L-förmigem Querschnitt,
- Figur 3: ein Profilteil mit dem Querschnitt eines regelmäßigen Achtecks,
- Figur 4: ein Profilteil mit einem U-förmigen Querschnitt,
- Figur 5: ein Profilteil mit einem kreuzförmigen Querschnitt,
- Figur 6: ein Profilteil mit einem doppel-T-Querschnitt und

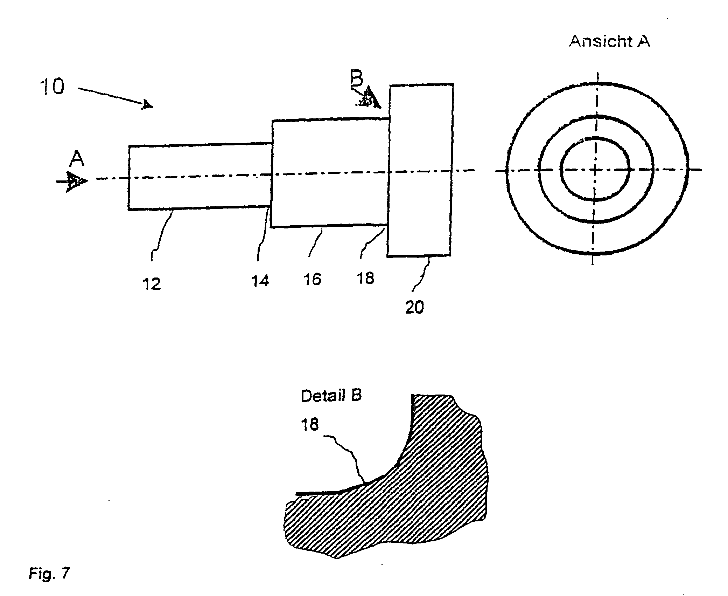

- Figur 7: verschiedene Ansichten einer aus dem erfindungsgemäßen Stahlmaterial hergestellten Welle.

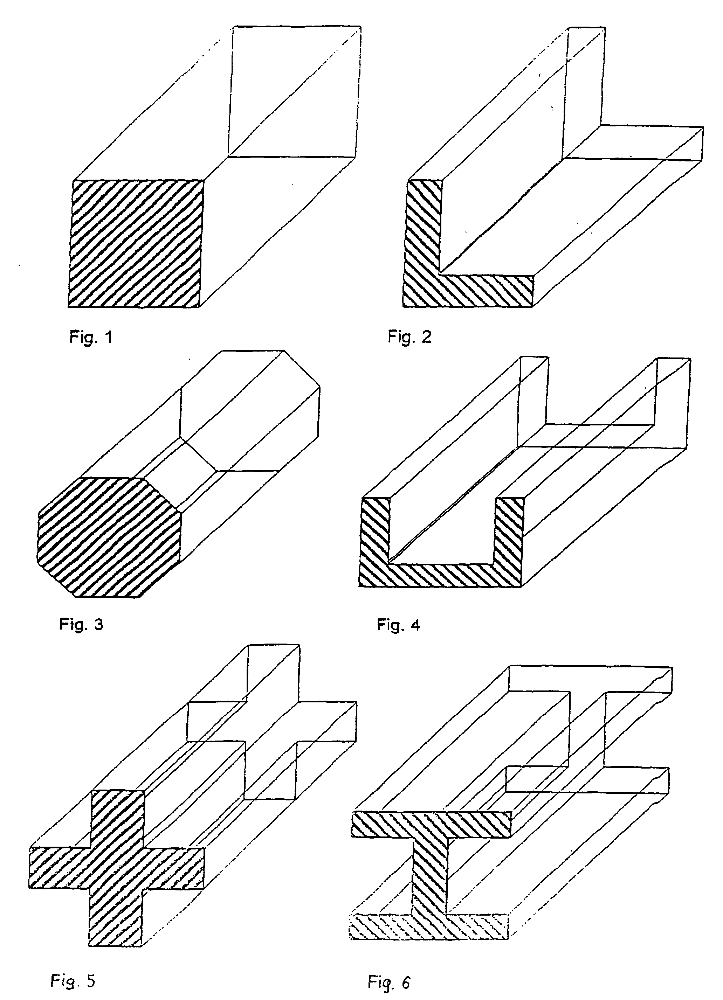

In den Figuren 1 bis 6 sind verschiedene Profilteile dargestellt, die sich im wesentlichen durch ihre Querschnitte unterscheiden, die jedoch bei dem jeweiligen Profilteil über die Länge hinweg konstant bleiben, wobei die Länge der Profilteile im Prinzip beliebig ist. Für praktische Zwecke weisen solche Profilteile typischerweise Längen von ca. 6 m auf, falls sie genügend biegbar sind, können sie jedoch auch zu Rollen aufgewickelt werden und sind dann auch in erheblich größeren Längen transportierbar. Selbstverständlich sind auch Hohlprofile, wie zum Beispiel Rohre der verschiedensten Querschnittsformen mit den erfindungsgemäßen Merkmalen herstellbar

Bei den dargestellten Profilteilen können die längsseitigen, scharfkantigen Eckbereiche mehr oder weniger stark abgerundet sein. Die Ausscheidungshärtung der Teile erfolgt induktiv und kann dadurch wahlweise auf beliebige Bereiche beschränkt werden, das heißt auf unterschiedliche Längsabschnitte und auf unterschiedliche Querschnittsbereiche.

Vorzugsweise erfolgt die Aushärtung in einer Oberflächenschicht, deren gesamte Querschnittsfläche zwischen 1 und 50% des gesamten Profilquerschnitts bzw. der Wandstärke des Stahlmaterials ausmacht.

Die induktive Ausscheidungshärtung von Bauteilen aus austenitischen Edelstählen reduziert die Wärmebehandlungsdauem auf den Bereich von mehreren Sekunden bis wenigen Minuten. Diese Verfahrensweise bietet - im Gegensatz zur ganzheitlichen Behandlung - die Möglichkeit, selektiv die Festigkeit/Härte versagenskritischer Bereiche zu steigern, während in den restlichen Bereichen optimale Zähigkeitseigenschaften beibehalten werden.

## Patentansprüche

1. Halbzeuge und Fertigprodukte in Form von Blechen, Profilen oder Wellen aus korrosionsbeständigem, ausscheidungshärtbarem, austenitischem Edelstahl mit einem hohen Gehalt an interstitiell gelöstem Stickstoff, mit im wesentlichen glatten Oberflächen, **dadurch gekennzeichnet, daß** das Stahlmaterial zonenweise ausscheidungsgehärtet ist und daß der Stahl eine chemische Zusammensetzung innerhalb der folgenden Bereiche aufweist
| | |
|---|---|
| C | 0,08-0,115% |
| Mn | 1,5-4% |
| Mo | 0,3-1,5% |
| Cr | 17,5-20% |
| Ni | 10-13% |
| N | 0,2-0,5% |
wobei der Rest im wesentlichen aus Eisen besteht.

2. Halbzeuge und Fertigprodukte nach Anspruch 1, **dadurch gekennzeichnet, daß** das Stahlmaterial zonenweise induktiv ausscheidungsgehärtet ist.

3. Halbzeuge und Fertigprodukte nach Anspruch 1 oder 2, **dadurch gekennzeichnet, daß** sie mindestens teilweise in einer Oberflächenschicht ausgehärtet, sind wobei die Dicke der ausscheidungsgehärteten Schicht weniger als 50%, vorzugsweise weniger als 30% und insbesondere weniger als 10% der senkrecht zur Oberfläche gemessenen Materialstärke beträgt

4. Halbzeuge und Fertigprodukte nach einem der Ansprüche 1 bis 3, **dadurch gekennzeichnet, daß** sie entweder Bleche oder Profilstäbe mit einem über die Länge im wesentlichen konstanten Querschnitt sind.

5. Halbzeuge und Fertigprodukte nach Anspruch 4, **dadurch gekennzeichnet, daß** der Profilquerschnitt kreisförmig rund, elliptisch, quadratisch, sechseckig, achteckig, L-förmig, kreuzförmig, U-förmig oder doppel-T-förmig ist.

6. Halbzeuge und Fertigprodukte nach Anspruch 4, **dadurch gekennzeichnet, daß** das Stahlmaterial ein Blech oder eine Platte mit im wesentlichen konstanter Materialstärke ist

7. Fertigprodukt nach einem der Ansprüche 1 bis 3, **dadurch gekennzeichnet, daß** es eine Welle mit über ihre axiale Länge hinweg variierendem Durchmesser ist.

8. Verfahren zur Herstellung von Halbzeugen und Fertigprodukten in Form von Blechen, Profilen oder Wellen aus korrosionsbeständigem, ausscheidungshärtbarem, austenitischen Edelstahl mit einem hohen Gehalt an interstitiell gelöstem Stickstoff, **dadurch gekennzeichnet, daß** zunächst ein Stahlmaterial der folgenden chemischen Zusammensetzung hergestellt wird
| | |
|---|---|
| C | 0,082-0,115% |
| Mn | 1,5-4% |
| Mo | 0,3-1,5% |
| Cr | 17,5-20% |
| Ni | 10-13% |
| N | 0,2-0,5% |
wobei der Rest im wesentlichen aus Eisen besteht,
daß das Material im noch warmen oder wieder erwärmten Zustand zu Halbzeugen und Fertigprodukten mit im wesentlichen glatter Oberfläche verformt und bei Bedarf auch kalt verformt wird und daß anschließend eine Ausscheidungsbehandlung vorgenommen wird, die höchstens einen Teil des Volumens der Halbzeuge und/oder Fertigprodukte erfaßt.

9. Verfahren nach Anspruch 8, **dadurch gekennzeichnet, daß** eine induktive Ausscheidungsbehandlung in einem Temperaturbereich von 300°C bis 550°C vorgenommen wird.

10. Verfahren nach Anspruch 8 oder 9, **dadurch gekennzeichnet, daß** die induktive Ausscheidungsbehandlung in der Weise vorgenommen wird, daß die Ausscheidungshärtung nur in einer Oberflächenschicht mit einer Schichtdicke von höchstens 0,5 mm eintritt.

11. Verfahren nach einem der Ansprüche 8 bis 10, **dadurch gekennzeichnet, daß** das Material im wesentlichen Endlosmaterial oder Stabmaterial bzw. Blechmaterial ist, welches kontinuierlich durch eine Induktionseinrichtung hindurchgeführt wird.

12. Verfahren nach einem der Ansprüche 8 bis 10, **dadurch gekennzeichnet, daß** anstelle einer induktiven Behandlung eine Ausscheidungshärtung durch Laserbestrahlung erfolgt

## Claims

1. Semi-finished and finished products in the form of sheets, profiles or shafts made of corrosion-resistant, precipitation hardenable, austenitic special steel with a high interstitially dissolved nitrogen content, with substantially smooth surfaces, **characterised in that** the steel material is precipitation hardened in a zoned manner, and **in that** the steel has a chemical composition within the following ranges:
| | |
|---|---|
| C | 0.08 - 0.115% |
| Mn | 1.5 - 4% |
| Mo | 0.3 - 1.5% |
| Cr | 17.5-20% |
| Ni | 10 - 13% |
| N | 0.2 - 0.5% |
wherein the remainder is substantially composed of iron.

2. Semi-finished and finished products according to claim 1, **characterised in that** the steel material is inductively precipitation hardened in a zoned manner.

3. Semi-finished and finished products according to claim 1 or 2, **characterised in that** they are at least partly hardened in a surface layer, wherein the thickness of the precipitation hardened layer is less than 50%, preferably less than 30% and in particular less than 10% of the material thickness measured perpendicular to the surface.

4. Semi-finished and finished products according to one of claims 1 to 3, **characterised in that** they are either sheets or profile rods with a substantially constant cross-section over their length.

5. Semi-finished and finished products according to claim 4, **characterised in that** the profile cross-section is circular, elliptical, quadratic, hexagonal, octagonal, L-shaped, cross-shaped, U-shaped or double T-shaped.

6. Semi-finished and finished products according to claim 6, **characterised in that** the steel material is a sheet or a plate with substantially constant material thickness.

7. Finished product according to one of claims 1 to 3, **characterised in that** it is a shaft with a diameter that varies along its axial length.

8. Method for manufacturing semi-finished and finished products from corrosion-resistant, precipitation hardenable austenitic special steel with a high interstitially dissolved nitrogen content, **characterised in that** a steel material with the following chemical composition is firstly manufactured:
| | |
|---|---|
| C | 0.082 - 0.115% |
| Mn | 1.5 - 4% |
| Mo | 0.3 - 1.5% |
| Cr | 17.5 - 20% |
| Ni | 10 - 13% |
| N | 0.2 - 0.5% |
wherein the remainder is substantially composed of iron, **in that** the material worked in the still hot, or re-heated state into semi-finished and finished products with a substantially smooth surface, and as required can also be cold-worked, and **in that** subsequently a precipitation hardening treatment is undertaken that affects at the most a part of the volume of the semi-finished and/or finished products.

9. Method according to claim 8, **characterised in that** inductive precipitation hardening treatment is undertaken in a temperature range of 300°C to 550°C.

10. Method according to claim 8 or 9, **characterised in that** inductive precipitation hardening treatment is undertaken such that the precipitation hardening only occurs in a surface layer with a layer thickness of 0.5 mm at the most.

11. Method according to one of claims 8 to 10, **characterised in that** the material is substantially endless material or rod material or respectively sheet material that is passed continuously through an induction apparatus.

12. Method according to one of claims 8 to 10, **characterised in that** instead of inductive treatment, precipitation hardening is done by laser irradiation.

## Revendications

1. Demi-produits et produits finis en forme de tôles, profilés ou de barres en acier fin austénitique, durci par précipitation et résistant à la corrosion ayant une teneur en azote dissous dans les interstices, lesdits produits présentant des surfaces sensiblement lisses, **caractérisés en ce que** le matériau d'acier est durci progressivement par précipitation et **en ce que** l'acier a une composition chimique dans les plages suivantes :
| | |
|---|---|
| C | 0,08 à 0,115% |
| Mn | 1,5 à 4% |
| Mo | 0,3 à 1,5% |
| Cr | 17,5 à 20% |
| Ni | 10 à 13% |
| N | 0,2 à 0,5% |
le reste étant du fer.

2. Demi-produits et produits finis selon la revendication 1, **caractérisés en ce que** le matériau d'acier est durci progressivement par précipitation par des moyens inductifs.

3. Demi-produits et produits finis selon la revendication 1 ou 2, **caractérisés en ce qu'**ils sont durcis au moins partiellement dans une couche de surface, l'épaisseur de la couche durcie par précipitation étant inférieure à 50%, avantageusement 30%, et en particulier inférieure à 10% de l'épaisseur du matériau mesurée perpendiculairement à la surface.

4. Demi-produits et produits finis selon l'une des revendications 1 à 3, **caractérisés en ce qu'**ils se présentent sous la forme de tôles ou de profilés dont la section est sensiblement constante sur la longueur.

5. Demi-produits et produits finis selon la revendication 4, **caractérisés en ce que** la section des profilés est circulaire, elliptique, carrée, hexagonale, octogonale, en forme de L, en forme de croix, en forme de U ou en forme de double I.

6. Demi-produits et produits finis selon la revendication 4, **caractérisés en ce que** le matériau acier se présente sous la forme d'une tôle ou d'une plaque dont l'épaisseur est sensiblement constante.

7. Demi-produits et produits finis l'une des revendications 1 à 3, **caractérisés en ce qu'**ils se présentent sous la forme d'une barre dont l'épaisseur varie dans la direction de son axe longitudinal.

8. Procédé de fabrication de demi-produits et de produits finis se présentant sous la forme de tôles, de profilés ou de barres en acier fin austénitique, durci par précipitation et résistant à la corrosion ayant une teneur en azote dissous dans les interstices, **caractérisé en ce que**
en premier lieu le matériau d'acier servant à la fabrication a la composition chimique suivante :
| | |
|---|---|
| C | 0,08 à 0,115% |
| Mn | 1,5 à 4% |
| Mo | 0,3 à 1,5% |
| Cr | 17,5 à 20% |
| Ni | 10 à 13% |
| N | 0,2 à 0,5% |
le reste étant du fer,
le matériau est déformé lorsqu'il est encore chaud ou a été réchauffé pour donner des demi-produits et des produits finis présentant une surface sensiblement lisse et, si besoin est, est déformé à froid, et l'on procède ensuite à un traitement par précipitation qui concerne tout au plus une partie du volume des demi-produits et/ou des produits finis.

9. Procédé selon la revendication 8, **caractérisé en ce que** l'on procède à un traitement inductif par précipitation dans une plage de température allant de 300°C à 550°C.

10. Procédé selon la revendication 8 ou 9, **caractérisé en ce que** l'on procède au traitement inductif par précipitation de façon à ce que le traitement par précipitation n'est effectué que dans une couche de surface d'une épaisseur de 0,5 mm tout au plus.

11. Procédé selon l'une des revendications 8 à 10, **caractérisé en ce que** le matériau est un matériau sensiblement sans fin ou un matériau sous forme de barre resp. de tôle qui passe en continu dans un dispositif à induction.

12. Procédé selon l'une des revendications 8 à 10, **caractérisé en ce qu'**un durcissement par précipitation par faisceau laser est effectué à la place d'un traitement inductif.
